# FASCICULE DE BREVET EUROPEEN

(11) **EP 1 311 592 B1**
(45) Date de publication et mention de la délivrance du brevet: **27.12.2006**
(21) Numéro de dépôt: 01960851.2
(22) Date de dépôt: 31.07.2001
(51) Int. Cl.: C08J 5/18, C08L 77/12, C08L 23/08, B32B 27/12

(54) **FILM IMPER-RESPIRANT**
WASSERDICHTER ATMUNGSAKTIVER FILM
BREATHABLE FILM

(30) Priorité: 04.08.2000 FR 0010376
(43) Date de publication de la demande: 21.05.2003
(73) Titulaire: Arkema France, 92800 Puteaux (FR)
(72) Inventeur: LACROIX, Christophe, F-27700 Harquency (FR)
(74) Mandataire: Delprat, Corinne
(86) Numéro de dépôt international: PCT/FR2001/002500
(87) Numéro de publication internationale: WO 2002/012376

(56) Documents cités:
- EP-A- 0 476 963
- EP-A- 0 527 447
- EP-A- 0 675 167
- EP-A- 0 842 969
- US-A- 5 869 414
- US-A- 6 051 649

## Description

L'invention a pour objet un film imper-respirant, c'est-à-dire un matériau perméable à la vapeur d'eau et imperméable à l'eau.

EP-A-0688826 décrit un tel film, constitué d'un mélange comprenant: (a) au moins un élastomère thermoplastique ayant des blocs polyéther et (b) au moins un copolymère comprenant de l'éthylène et au moins un (méth)acrylate d'alkyle. L'élastomère (a) peut être un polyétheresteramide. Le copolymère (b) peut être un mélange d'un premier copolymère (b1) éthylène/(meth)acrylate d'alkyle et d'un second copolymère (b2) éthylène/(meth)acrylate d'alkyle fonctionnalisé notamment par de l'anhydride maléique ou du méthacrylate de glycidyle. L'élastomère thermoplastique ayant des blocs polyéther peut être à blocs polyamide, ce bloc polyamide étant un homopolyamide.

Cependant, on recherche des films dont les constituants peuvent être mélangés aisément et qui conduisent à des films qui ont une bonne étirabilité, même à grande vitesse, tout en gardant les qualités requises pour un film imper-respirant, à savoir une perméabilité relative, une reprise d'humidité faible (ce qui sinon provoque le gonflement des films), une souplesse suffisante et un collage facile sur des non-tissés.

On a maintenant trouve des films imper-respirants qui ont une forte perméabilité tout en ayant une faible reprise d'humidité, qui sont faciles à extruder à grande vitesse et sans défauts, qui ne bloquent pas et qui ont un aspect soyeux. Les films selon l'invention possèdent un fort allongement avant rupture. Ils peuvent être associés facilement à des non-tissés, notamment sans utiliser de colle par laminage direct sur le non-tissé.

L'invention est relative à un film imper-respirant comprenant un mélange:
- d'au moins un polymère (a) pris dans le groupe comprenant un copolymère (a1) éthylène /(méth)acrylate d'alkyle, un copolymère (a2) éthylène/acide (méth)acrylique éventuellement neutralisé, un copolymère éthylène/monomère vinylique (a3), le mélange (a1) et (a2), le mélange (a1) et (a3), le mélange (a2) et (a3) et le mélange (a1), (a2) et (a3); et/ou
- d'au moins un polyéthylène fonctionnalisé (b); et
- d'au moins un copolymère (c) ayant des blocs copolyamide et des blocs polyéther.
ou bien un melange
- d'au moins un polyethylène fonctionnalisé (b); et
- d'au moins un copolymère (c) ayant des blocs copolyamide et des blocs polyether.

Selon un mode de réalisation du film imper-respirant, le copolymère (c) a une température de fusion comprise entre 80 et 150°C, de préférence entre 90 et 135°C.

Selon un mode de réalisation du film imper-respirant, le copolymère (c) ayant des blocs copolyamide et des blocs polyéther est un polyétheresteramide.

Selon un mode de réalisation du film imper-respirant, les blocs copolyamide résultent de la condensation d'au moins un acide alpha-omega aminocarboxylique ou un lactame, au moins une diamine et au moins un acide dicarboxylique.

Selon un mode de réalisation du film imper-respirant, les blocs copolyamide dérivent de blocs 6, 11, 12, 6.6, 6.10 ou 6.12.

Selon un mode de réalisation du film imper-respirant, les blocs polyéther sont des blocs PEG.

Selon un mode de réalisation du film imper-respirant, le (méth)acrylate d'alkyle (a1) est choisi parmi l'acrylate de n-butyle, l'acrylate d'isobutyle, l'acrylate d'éthyl-2 hexyle, l'acrylate de cyclohexyle, l'acrylate de n-octyle, le méthacrylate de méthyle et le méthacrylate d'éthyle.

Selon un mode de réalisation du film imper-respirant, le polyéthylène fonctionnalisé (b) est un copolymère éthylène/(méth)acrylate d'alkyle fonctionnalisé.

Selon un mode de réalisation du film imper-respirant, le polyéthylène fonctionnalisé (b) est un polyéthylène ou un copolymère éthylène/(méth)acrylate d'alkyle, fonctionnalisé par un monomère choisi parmi (i) un acide carboxylique insaturé, (ii) un anhydride d'acide carboxylique insaturé et (iii) un époxyde insaturé par greffage ou par copolymérisation.

Selon un mode de réalisation du film imper-respirant, le polyéthylène fonctionnalisé (b) est greffé ou copolymérisé avec un méthacrylate de glycidyle.

Selon un mode de réalisation du film imper-respirant, dans lequel le polymère (b) représente de 1 à 40, de préférence de 2 à 20, plus préférentiellement de 3 à 15 % en poids de la composition finale.

Selon un mode de réalisation du film imper-respirant, le polymère (c) représente de 20 à 95, de préférence de 25 à 80, plus préférentiellement de 30 à 70 % en poids de la composition finale.

Selon un mode de réalisation du film imper-respirant, le polymère (a) représente de 10 à 90, de préférence de 40 à 80 % en poids de la composition finale.

Selon un mode de réalisation du film imper-respirant, la somme des polymères (a) et (b) représente de préférence plus de 50 %, plus préférentiellement plus de 55 % en poids de la composition finale.

Selon un mode de réalisation du film imper-respirant, la somme des polymères (a) et (b) représente de préférence moins de 50 %, plus préférentiellement mois de 45 % en poids de la composition finale.

Selon un mode de réalisation du film imper-respirant, celui-ci comprend:
- de 40 à 80 %, de préférence 45 à 75 %, du polymère (a);
- de 2 à 20 %, de préférence 3 à 15 % du copolymère (b);
   la somme des constituants (a) et (b) étant égale à au moins 50 %, de préférence au moins 55 %; et
- de 18 à 50 %, de préférence 20 à 50 %, de préférence encore 22 à 45 %, de préférence encore 25 à 45 %, d'au moins un copolymère (c) ayant des blocs copolyamide et des blocs polyéther.

Selon un mode de réalisation du film imper-respirant, celui-ci présente une épaisseur comprise entre 10 et 200 µm.

L'invention est également relative à un procédé de fabrication d'un film tel que décrit précédemment comprenant l'extrusion de celui-ci.

L'invention a également pour objet un matériau imper-respirant comprenant le film, tel que décrit précédemment, associé a un non-tissé ou à un tissé.

Selon un mode de réalisation, le matériau imper-respirant est caractérisé en ce que le mélange de copolymères composant le film imper-respirant est extrudé et laminé sur un substrat textile tissé ou non tissé. L'invention fournit aussi un procédé de fabrication de ce matériau imper-respirant, comprenant l'extrusion et la lamination du mélange de copolymères composant le film selon l'invention sur un substrat textile tissé ou non tissé.

### Copolymère (a).

Ce copolymère d'éthylène peut être à base de (méth)acrylate d'alkyle (copolymère (a1)) ou à base d'acide (méth)acrylique éventuellement neutralisé (copolymère a2)) ou à base d'un monomère vinylique (copolymère (a3)) ou peut être un mélange de copolymères (a1) ou (a2) ou (a3) ou de ceux-ci.

S'agissant du copolymère (a1), il est à base d'éthylène et de (méth)acrylate d'alkyle, qui représente en général de 5 à 40 % en poids du copolymère, de préférence de 10 à 35 %.

Le monomère (méth)acrylate d'alkyle peut avoir jusqu'à 24 et de préférence 10 atomes de carbone et peut être linéaire, ramifié ou cyclique. A titre d'illustration du (méth)acrylate d'alkyle, on peut citer notamment l'acrylate de n-butyle, l'acrylate d'isobutyle, l'acrylate d'éthyl-2 hexyle, l'acrylate de cyclohexyle, le méthacrylate de méthyle, le méthacrylate d'éthyle. Parmi ces (méth)acrylates, on préfère l'acrylate d'éthyle, l'acrylate de n-butyle et le méthacrylate de méthyle.

Le MFI (Melt Flow Index ou indice de fluidité à l'état fondu) de ces copolymères (a1) est avantageusement compris entre 0,1 et 50 g/10 min (190°C - 2,16 kg). Ces copolymères peuvent être fabriqués par polymérisation radicalaire en tube ou autoclave à des pressions comprises entre 300 et 2500 bars.

S'agissant du copolymère (a2), il est à base d'éthylène et d'acide (méth)acrylique, qui représente en général jusqu'à 10 % en moles de (a2) et avantageusement entre 1 et 5 %. On ne sortirait pas du cadre de l'invention si (a2) comprenait en outre un (meth)acrylate d'alkyle en proportion pouvant atteindre 40 % en poids de (a2). Les fonctions acides peuvent être en tout ou en partie neutralisées par un cation tel que le lithium, le sodium, le potassium, le magnésium, le calcium, le strontium, le zinc et le cadmium. Le MFI de ces copolymères est avantageusement compris entre 0,1 et 50 g/10 min. Ces copolymères peuvent être fabriqués par polymérisation radicalaire en tube ou autoclave à des pressions comprises entre 300 et 2500 bars.

S'agissant du copolymère (a3), il est à base d'éthylène et de monomère vinylique tel que acétate de vinyle, propionate de vinyle, méthylvinylcétone, vinylpyrrolidone, vinylcaprolactame, éthers vinyliques, en particulier les éthers méthylique, éthylique, isobutylique, ce monomère représentant en général de 5 à 40 % en poids du copolymère, de préférence de 10 à 35 %.

Ces copolymères sont disponibles dans le commerce.

On ne sortirait pas du cadre de l'invention si deux ou plusieurs comonomères étaient utilisés.

### Polymère (b).

Ce polymère est à base d'éthylène mais porte par ailleurs des fonctionnalités. Ces fonctionnalités sont par exemple choisies parmi (i) un acide carboxylique insaturé, (ii) un anhydride d'acide carboxylique insaturé ou (iii) un époxyde insaturé. D'autres fonctionnalités comme isocyanate, isoxazone, etc. sont aussi possibles. Ces fonctionnalités peuvent être apportées par greffage ou co- ou ter-polymérisation.

A titre d'acide carboxylique insaturé on peut citer par exemple l'acide (meth)acrylique, l'acide crotonique et l'acide cinnamique.

Ce copolymère est avantageusement un copolymère (b1) qui est un (co)polymère de l'éthylène et d'un anhydride d'acide carboxylique insaturé; il peut être un polyéthylène greffé par un anhydride d'acide carboxylique insaturé ou un copolymère de l'éthylène et d'un monomère anhydride d'acide carboxylique insaturé qu'on obtient par exemple par copolymérisation radicalaire.

L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo-(2,2,1)-hept-5-ène-2,3-dicarboxylique, et x-méthylbicyclo-(2,2,1)-hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (méth)acrylique.

S'agissant des polyéthylènes sur lesquels on vient greffer l'anhydride d'acide carboxylique insaturé on entend par polyéthylène des homo- ou copolymères.

A titre de comonomères, on peut citer :
- les alpha-oléfines, avantageusement celles ayant de 3 à 30 atomes de carbone; à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène; ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle, l'acrylate de n-octyle,
- les esters vinyliques d'acides carboxyliques saturés tels que par exemple l'acétate ou le propionate de vinyle,
- les diènes tels que par exemple le 1,4-hexadiène.

Le polyéthylène peut comprendre plusieurs des comonomères précédents.

Les copolymères cités en (a) sont aussi appropriés.

Avantageusement le polyéthylène qui peut être un mélange de plusieurs polymères, comprend au moins 50 % et de préférence 75 % (en moles) d'éthylène, sa densité peut être comprise entre 0,86 et 0,98 g/cm³. Le MFI (indice de fluidité à 190°C, 2,16 kg) est compris avantageusement entre 0,1 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène-propylène-rubber)
- les élastomères EPDM (éthylène-propylène-diène monomère)
- les mélanges de polyéthylène avec un EPR ou un EPDM
- les copolymères éthylène-(méth)acrylate d'alkyle pouvant contenir jusqu'à 60 % en poids de (méth)acrylate et de préférence 2 à 40 %.

Le greffage est une opération connue en soi. Par exemple, le monomère à greffer est introduit dans une zone appropriée d'une extrudeuse préalablement chargée avec le polymère à greffer, qui se trouve à l'état fondu lors du greffage (en général un peroxyde est présent). Le greffage peut aussi être effectuée en phase solvant.

S'agissant des copolymères de l'éthylène et de l'anhydride d'acide carboxylique insaturé c'est-à-dire ceux dans lesquels l'anhydride d'acide carboxylique insaturé n'est pas greffé il s'agit des copolymères de l'éthylène, de l'anhydride d'acide carboxylique insaturé et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène-(méth)acrylate d'alkyle-anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 0,5 et 200 (190°C - 2,16 kg). Les (méth)acrylates d'alkyle ont déjà été décrits plus haut. On peut utiliser un mélange de plusieurs copolymères (b1), on peut aussi utiliser un mélange d'un copolymère éthylène-anhydride maléique et d'un copolymère éthylène-(méth)acrylate d'alkyle-anhydride maléique.

Le copolymère (b1) est disponible dans le commerce. Il est produit par polymérisation radicalaire à une pression pouvant être comprise entre 200 et 2500 bars, il est vendu sous forme de granulés.

Ce copolymère est avantageusement un copolymère (b2) qui est un copolymère de l'éthylène et d'un époxyde insaturé.

Ce copolymère (b2) peut être obtenu par copolymérisation de l'éthylène et d'un époxyde insaturé ou par greffage de l'époxyde insaturé sur le polyéthylène. Le greffage est une opération décrite plus haut et connue en soi. Quant à la copolymérisation de l'éthylène et d'un époxyde insaturé, on peut utiliser les procédés dits de polymérisation radicalaire fonctionnant habituellement à des pressions entre 200 et 2 500 bars.

A titre d'exemple d'époxydes insaturés, on peut citer:
- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

S'agissant du greffage le copolymère s'obtient à partir du greffage d'un polyéthylène homo ou copolymère comme décrit pour (b1) sauf qu'on greffe un époxyde au lieu d'un anhydride. S'agissant d'une copolymérisation c'est aussi semblable à (b1) sauf qu'on utilise un époxyde; il peut aussi y avoir d'autres comonomères comme dans le cas de (b1).

Les modes de réalisation décrit pour (b1) s'appliquent *mutatis mutandis* pour (b2).

Le produit (b2) est avantageusement un copolymère éthylène-(méth)acrylate d'alkyle-époxyde insaturé (terpolymérisé ou de préférence greffé) ou un copolymère éthylène-époxyde insaturé (copolymérisé ou de préférence greffé). Avantageusement il peut contenir jusqu'à 40 % en poids de (méth)acrylate d'alkyle, de préférence 5 à 40 % et jusqu'à 10 % en poids d'époxyde insaturé, de préférence 0,1 à 8 %.

L'époxyde est avantageusement le (méth)acrylate de glycidyle.

Avantageusement le (méth)acrylate d'alkyle est identique à celui décrit plus haut en relation avec (b1) et est choisi de préférence parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 10 à 35 %. Le MFI est avantageusement compris entre 0,5 et 200 (en g/10 min à 190°C sous 2,16 kg). On peut utiliser un mélange de plusieurs copolymères (b2), on peut aussi utiliser un mélange d'un copolymère éthylène-(méth)acrylate d'alkyle-époxyde insaturé et d'un copolymère éthylène-époxyde insaturé.

Ce copolymère (b2) peut être obtenu par polymérisation radicalaire des monomères.

On peut aussi utiliser un mélange des copolymères (b1) et (b2).

### Autres polymères.

Outre les polymères (a) ou (b), on peut utiliser d'autre polymères en mélange, inertes vis-à-vis des autres composés et compatibles avec eux. Notamment, on peut utiliser des polyoléfines, et en particulier les polymères et copolymères d'éthylène mentionnés dans le cadre des polymères (a) et (b).

Ainsi, on peut ajouter un PE (LDPE, LLDPE, HDPE, etc.) à un mélange de polymères (b) et (c).

### Copolymère (c).

Ce copolymère est :
- un copolymère à blocs copolyamide et à blocs polyéther, présentant l'avantage, par rapport au copolymère décrit dans EP-A-0688826 de présenter une température de fusion plus faible, et par conséquent de se mélanger plus facilement avec les copolymères acryliques (a) et/ou (b), conduisant à l'obtention d'une phase continue garantissant l'imper-respirabilité.

Ces copolymères (c) ont une température de fusion en général comprise entre 80 et 150°C, de préférence entre 90 et 135°C. Ceci permet d'ajuster plus facilement les viscosités des polymères (a), (b) et (c), ce qui améliore la processabilité de la composition finale.

Les polymères à blocs copolyamides et blocs polyéthers présentent en général des duretés shore D pouvant être comprises entre 20 et 75 et avantageusement entre 30 et 70 et une viscosité intrinsèque comprise entre 0,8 et 1,75 dl/g mesurée dans le métacresol à 25°C pour une concentration initiale de 0,5 g/100 ml.

Les polymères à blocs copolyamides et blocs polyéthers résultent de la copolycondensation de séquences copolyamides à extrémités réactives avec des séquences polyéthers à extrémités réactives, telles que, entre autres:
(1) Séquences copolyamides à bouts de chaîne diamines avec des séquences polyoxyalkylenes à bouts de chaînes dicarboxyliques;
(2) Séquences copolyamides à bouts de chaînes dicarboxyliques avec des séquences polyoxyalkylenes à bouts de chaînes diamines obtenues par cyanoéthylation et hydrogénation de séquences polyoxyalkylene alpha-omega dihydroxylées aliphatique appelées polyétherdiols;
(3) Séquences copolyamides à bouts de chaînes dicarboxyliques avec des polyétherdiols, les produits obtenus étant, dans ce cas particulier, des polyétheresteramides.

On utilise de préférence ceux de la dernière catégorie.

Les séquences copolyamides à bouts de chaînes dicarboxyliques proviennent, par exemple, de la condensation d'au moins un acide alpha-omega aminocarboxylique (ou un lactame), au moins une diamine et au moins un acide dicarboxylique.

A titre d'exemple d'acide alpha-omega aminocarboxylique on peut citer ceux ayant de 6 à 12 atomes de carbone et notamment l'acide aminoundécanoïque et l'acide aminododécanoïque.

A titre d'exemple de lactame on peut citer ceux ayant de 6 à 12 atomes de carbone et notamment le caprolactame (dans ce cas on préférera que le copolyamide qui en résulte soit purifié du monomère caprolactame qui y est éventuellement dissous) et le lauryllactame.

A titre d'exemple d'acide dicarboxylique, on peut citer ceux ayant de 4 à 12 atomes de carbone et notamment l'acide adipique, l'acide sébacique, l'acide isophtalique, l'acide butanedioïque, l'acide 1,4-cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98 % et sont de préférence hydrogénés) et l'acide dodécanedioïque HOOC-(CH₂)₁₀-COOH,

A titre d'exemple de diamine, on peut citer celles qui sont aliphatiques ayant de 6 à 12 atomes de carbone, aryliques ou cycliques saturées, et notamment l'hexaméthylènediamine, la pipérazine et ses dérivés, la tétraméthylène-diamine, l'octaméthylènediamine, la décaméthylènediamine, la dodécaméthylènediamine, le 1,5-diaminohexane, le 2,2,4-triméthyl-1,6-diaminohexane, les polyolsdiamine, l'isophoronediamine (IPD), le méthylpentaméthylènediamine (MPDM), la bis(aminocyclohexyl)méthane (BACM) et la bis(3-méthyl-4-aminocyclohexyl)méthane (BMACM).

La masse molaire en nombre Mn des séquences copolyamides est en général comprise entre 300 et 5 000 et de préférence entre 400 et 1 000.

Les différents constituants de la séquence copolyamide sont avantageusement choisis afin de conduire, dans le polymère final, à une température de fusion comprise par exemple entre 90 et 135°C.

Les blocs copolyamides dérivent de deux, trois, quatre ou plus unités 6, 11, 12, 6.6, 6.10 et 6.12, ou tout autre unité dérivant des lactames, aminoacide et couple diamine-diacide, notamment ceux décrits ci-dessus. Les proportions respectives peuvent varier dans de larges mesures, en fonction des propriétés finales recherchées, par exemple le point de fusion.

A titre d'exemple de blocs copolyamides, on peut citer les blocs copolyamides A/B/C suivants où :
- A est 6 ou 6.6 ;
- B est 11 ou 12 ; et
- C est 6.10 ou 6.12 ;

6 désignant des motifs résultant de la condensation du caprolactame, 6.6 désignant l'hexaméthylène diamine condensée avec l'acide adipique, 11 désignant des motifs résultant de la condensation de l'acide aminoundécanoïque, 12 désignant des motifs résultant de la condensation du lauryllactame ou de l'acide aminododécanoïque, 6.10 désignant l'hexaméthylène diamine condensée avec l'acide décanedioïque, 6.12 désignant l'hexaméthylène diamine condensée avec l'acide dodécanedioïque.

Les proportions en poids sont 20 à 30 pour A, 20 à 30 pour B et 15 à 25 pour C, le total étant 70 et avantageusement 22 à 28 pour A, 22 à 28 pour B et 18 à 24 pour C, le total étant 70.

S'agissant des copolymères (c) à blocs polyesters et blocs polyéthers, ils sont constitués de blocs polyéthers souples qui sont les restes de polyétherdiols et de segments rigides (blocs polyesters) qui résultent de la réaction d'au moins un diacide carboxylique avec au moins un motif diol court allongeur de chaine. Les blocs polyesters et les blocs polyéthers sont reliés par des liaisons esters résultant de la réaction des fonctions acides de l'acide avec les fonctions OH du polyétherdiol. Le diol court allongeur de chaîne peut être choisi parmi les glycols suivants : néopentylglycol, cyclohexanediméthanol et les glycols aliphatiques de formules HO(CH₂)ₙOH dans laquelle n est un entier de 2 à 10. Ces copolyétheresters sont des élastomères thermoplastiques. Selon une forme de l'invention, les blocs polyesters résultent de la réaction d'un diol court allongeur de chaîne avec au moins un diacide carboxylique contenant une fonction ionique par exemple sulfoné et éventuellement d'autres diacides carboxyliques (différents du diacide carboxylique sulfoné) ou de leurs dérivés. Selon une autre forme de l'invention, les blocs polyéthers de ces copolymères (c) sont des polyétherdiols et résultent de l'enchaînement de blocs polyéthers et d'un diacide carboxylique contenant une fonction ionique. Avantageusement les proportions sont telles qu'il y ait un bloc polyétherdiol de plus que de diacide carboxylique fonctionnel pour que le diacide carboxylique fonctionnel soit à l'intérieur de la chaîne et qu'ainsi la chaîne soit à terminaisons OH. On peut utiliser un mélange de plusieurs copolymères (c) à blocs polyesters et blocs polyéthers.

Le polyéther peut être par exemple un polyéthylène glycol (PEG), un polypropylène glycol (PPG) ou un polytétra méthylène glycol (PTMG), encore appelé polytétrahydrofurane (PTHF). Que les blocs polyéther soient dans la chaîne du polymère a blocs polyamides et blocs polyester sous forme de diols ou de diamines, on les appelle par simplification blocs PEG ou blocs PPG ou encore blocs PTMG. On ne sortirait pas du cadre de l'invention si les blocs polyéther contenaient des motifs différents tels que des motifs dérivés de l'éthylène glycol (-OC₂H₄-), du propylène glycol (-OCH₂-CH(CH₃)-) ou encore du tetraméthylène glycol (-O-(CH₂)₄-). On peut encore utiliser des blocs obtenus par oxyéthylation de bisphénol A; ces derniers produits sont décrits dans EP-A-0 613 919. Le polyéther préféré est le PEG, seul ou en mélange.

La masse Mn des séquences polyéther est en général comprise entre 100 et 6 000 et de préférence entre 200 et 3 000.

Les polymères à blocs copolyamides et blocs polyéthers peuvent aussi comprendre des motifs repartis de façon aléatoire.

La quantité de blocs polyéther représentent en général entre 5 et 85 % en poids du polymère final, de préférence entre 10 et 50 %.

Des copolyamides utiles dans l'invention sont notamment décrits dans les brevets US 4 483 975, DE 3 730 504, US 5 459 230.

Les copolymères de l'invention peuvent être préparés par tout moyen permettant d'accrocher les blocs polyamide et les blocs polyéther. En pratique, on utilise essentiellement deux procédés l'un dit en 2 étapes, l'autre en une étape.

Le procédé en 2 étapes consiste d'abord à préparer les blocs polyamide à extrémités carboxyliques par condensation des précurseurs de polyamide en présence d'un diacide carboxylique limiteur de chaîne puis dans une deuxième étape à ajouter le polyéther et un catalyseur. Si les précurseurs de polyamide ne sont que des lactames ou des acides alpha oméga aminocarboxyliques, on ajoute un diacide carboxylique. Si les précurseurs comprennent déjà un diacide carboxylique on l'utilise en excédent par rapport à la stoechiométrie des diamines. La réaction se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et un catalyseur. On peut ajouter le polyéther en une ou plusieurs fois, de même pour le catalyseur. Selon une forme avantageuse on ajoute d'abord le polyéther, la réaction des extrémités OH du polyéther et des extrémités COOH du polyamide commence avec formations de liaison ester et élimination d'eau ; on élimine le plus possible l'eau du milieu réactionnel par distillation puis on introduit le catalyseur pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible. Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et le hafnium.

A titre d'exemple de dérivé on peut citer les tétraalcoxydes qui répondent à la formule générale M(OR)₄, dans laquelle M représente le titane, le zirconium ou le hafnium et les R, identiques ou différents, désignent des radicaux alcoyles, linéaires ou ramifiés, ayant de 1 à 24 atomes de carbone.

Les radicaux alcoyles en C₁ à C₂₄ parmi lesquels sont choisis les radicaux R des tétraalcoxydes utilisés comme catalyseurs dans le procédé suivant l'invention sont par exemple tels que méthyl, éthyl, propyl, isopropyl, butyl, éthylhexyl, décyl, dodécyl, hexadodécyl. Les catalyseurs préférés sont les tétraalcoxydes pour lesquels les radicaux R, identiques ou différents, sont des radicaux alcoyles en C₁ à C₈. Des exemples de tels catalyseurs sont notamment Zᵣ (OC₂H₅)₄, Zᵣ(O-isoC₃H₇)₄, Zᵣ(OC₄H₉)₄, Zᵣ(OC₅H₁₁)₄, Zᵣ(OC₆H₁₃)₄, H_{f}(OC₂H₅)₄, H_{f}(OC₄H₉)₄, H_{f}(O-isoC₃H₇)₄.

Le catalyseur utilisé dans ce procédé suivant l'invention peut consister uniquement en un ou plusieurs des tétraalcoxydes de formule M(OR)₄ définis précédemment. Il peut encore être formé par l'association d'un ou plusieurs de ces tétraalcoxydes avec un ou plusieurs alcoolates alcalins ou alcalino-terreux de formule (R₁O)ₚY dans laquelle R₁ désigne un reste hydrocarboné, avantageusement un reste alcoyle en C₁ à C₂₄, et de préférence en C₁ à C₈, Y représente un métal alcalin ou alcalino-terreux et p est la valence de Y. Les quantités d'alcoolate alcalin ou alcalino-terreux et de tétraalcoxydes de zirconium ou de hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange du polyamide dicarboxylique avec le polyoxyalcoylène glycol, et se situe de préférence entre 0,05 et 2 % de ce poids.

A titre d'exemple d'autres dérivés on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide lauryque, l'acide myristique, l'acide palmitique, l'acide stéarique, l'acide oléique, l'acide linolique, l'acide linolénique, l'acide cyclohexane carboxylique, l'acide phénylacétique, l'acide benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent ZrO⁺⁺ au cours du procédé. On utilise le produit vendu sous le nom d'acétate de zirconyle. La quantité à utiliser est la même que pour les dérivés M(OR)₄.

Ce procédé et ces catalyseurs sont décrits dans les brevets US 4,332,920, US 4,230,838, US 4,331,786, US 4,252,920, JP 07145368A, JP 06287547A, et EP 613919.

S'agissant du procédé en une étape on mélange tous les réactifs utilisés dans le procédé en deux étapes c'est-à-dire les précurseurs de polyamide, le diacide carboxylique limiteur de chaîne, le polyéther et le catalyseur. Il s'agit des mêmes réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut. La pression s'établit entre 5 et 30 bars. Quand elle n'évolue plus on met le réacteur sous pression réduite tout en maintenant une agitation vigoureuse des réactifs fondus. La réaction est suivie comme précédemment pour le procédé en deux étapes.

Le catalyseur utilisé dans le procédé en une étape est de préférence un sel du métal (M) et d'un acide organique ou un sel complexe entre l'oxyde de (M) et/ou l'hydroxyde de (M) et un acide organique.

### Composition.

La composition comprend soit (a), soit (b), soit les deux, éventuellement avec une polyoléfine ou un autre polymère inerte vis-à-vis des autres composés et compatibles avec eux. De préférence, (b) est présent.

Le polymère (a) représente, lorsqu'il est présent, en général de 10 à 90, de préférence de 40 à 80, plus préférentiellement de 45 à 75 % en poids de la composition finale.

Le polymère (b) représente en général de 1 à 40, de préférence de 2 à 20, plus préférentiellement de 3 à 15 % en poids de la composition finale.

Le polymère (c) représente en général de 8 à 70, de préférence de 18 à 50, plus préférentiellement de 22 à 45 % en poids de la composition finale.

Selon un mode de réalisation, la somme (a) + (b) représente plus de 50 %, plus préférentiellement plus de 55 % en poids de la composition.

Selon un autre mode de réalisation, la somme (a) + (b) représente moins de 50 %, plus préférentiellement mois de 45 % en poids de la composition.

Les deux cas ci-dessus correspondent aux cas où le polymère (c) représente ou non la phase minoritaire.

### Film.

Les films selon l'invention ont une épaisseur pouvant être par exemple entre 10 et 200 µm et de préférence de 15 a 35 µm. Le mélange de polymères qui constitue le film imper-respirant de l'invention peut éventuellement contenir des charges organiques et/ou minérales. A titre d'exemple de charges, on peut citer notamment la silice, l'oxyde de titane. Le mélange peut également contenir divers additifs tels que agents anti-UV, agents démoulants, modifiants chocs, etc., ainsi que des colorants ou des pigments. On fabrique ces mélanges par les techniques usuelles de mélange a l'état fondu, puis on les met en film par les techniques connues en soi, notamment par extrusion. Ils peuvent être préparés par extrusion a grande vitesse. Les films de l'invention sont imperméables à l'eau et aux solutions aqueuses, ils sont perméables a la vapeur d'eau et ne sont pas microporeux, c'est-à-dire que ce sont des films continus. Ils ont une bonne perméabilité a la vapeur d'eau, pouvant atteindre 10 000, de préférence 20 000, avantageusement 25 000 g/m².24h selon la norme ASTM E 96BW (films en contact avec l'eau). Ils ont une reprise d'humidité très nettement inférieure à celle d'un film constitué essentiellement d'un polymère comprenant des blocs PEG. Les films ne sont pas bloquants, ils sont souples, d'un toucher soyeux, et ne sont pas bruyants. Ces films sont utiles pour faire des pansements, des patches, des poches pour ostomy, des gants. L'invention concerne aussi ces objets.

Les films de l'invention peuvent être fixés sur un matériau en tissé ou en non-tissé essentiellement sans adhésif par exemple par couchage à chaud ou par pressage. Le film peut être laminé à chaud ou il peut être déposé directement à l'état fondu, par exemple il est déposé sur le matériau par extrusion. On peut aussi utiliser des adhésifs soit en couche complète entre le film imper-respirant et le non-tissé soit en bandes ou toute application discontinue, telle que des pointillés ou des tâches. Ces adhésifs peuvent être des hot-melts. La présente invention concerne aussi ces matériaux imper-respirants formés du film de l'invention associé à un tissé ou à un non-tissé. On ne sortirait pas du cadre de l'invention en ajoutant d'autres couches, soit du côté du film imper-respirant, soit du côté du tissé ou non-tissé. Ces autres couches pouvant être des tissés ou non-tissés identiques ou différents de ceux déjà présents. Ces matériaux imper-respirants formés du film imper-respirant associé à un tissé ou un non-tissé sont souples et comme le film a une faible reprise d'humidité, il se délamine moins facilement du tissé ou du non-tissé qu'un film constitué seulement de polymère à blocs polyéther.

Ces matériaux (tissé ou non-tissé revêtu du film selon l'invention) sont utiles pour faire des vêtements de protection du personnel médical, des articles d'hygiène jetables, des alaises de màtelas, des films sous-toiture pour les maisons, des vêtements, des chaussures.

Comme tissé on peut utiliser tout tissu utilisé dans l'industrie textile en particulier pour les vêtements tels que par exemple le coton, le polyamide, le polyester.

Comme non-tissé on peut utiliser tout non-tissé, notamment à base de fibres de cellulose ou de fibres végétales ou à base de fibres de polyoléfine homo ou copolymère telle que par exemple le polyéthylène, le polypropylène ou les copolymères de l'éthylène et d'un (méth)acrylate d'alkyle.

Les exemples suivants illustrent l'invention sans la limiter.

Préparation du copolymère 6/11/6.12/PEG₆₀₀.12 en proportion 24.5/24.5/21/30.

Les monomères suivants sont introduits dans un autoclave qui est équipé d'un agitateur : 2.44 kg de caprolactame, 2.44 kg d'acide aminoundécanoïque, 2.25 kg d'acide dodécanedioïque et 0.70 kg d'hexaméthylènediamine (sous forme d'une solution de 73,1 % dans l'eau).

Le mélange ainsi formé est mis sous atmosphère inerte et chauffé jusqu'à ce que la température atteigne 260°C en maintenant une agitation vigoureuse dès la fusion des réactifs. Pendant 2 heures on maintient 260°C et 20 bars de pression (précondensation). Ensuite on diminue la pression lentement (1,25 h) de 25 bars à la pression atmosphérique et la température de 260 à 245°C. Maintenant on introduit une dispersion fine (voire une solution) de 2.17 kg polyéthylène dihydroxylé (PEG600, Mn = 600) et 19g de zirconylacétate (dans une solution eau/acide acétique à 22 % en poids).

Le mélange obtenu est mis sous pression réduite d'env. 30 mbar. La réaction est poursuivie pendant une durée de 3 heures. Le produit est extrudé dans un bain d'eau et granulé. Le produit obtenu a une viscosité relative comprise entre 1,45 et 1,6 et une température de fusion entre 105 et 115°C.

On réalise les films à partir des composés suivants:
Composé (a): copolymère éthylène/acrylate de méthyle selon un ratio en poids 82/18, ayant un MFI de 2 (190°C/2,16kg).
Composé (b): terpolymère éthylène/acrylate de méthyle/méthacrylate de glycidyle selon un ratio en poids 76/18/8, ayant un MFI de 6 (190°C/2,16kg).
Composé (c): polyamide modifié obtenu selon le mode opératoire indiqué ci-dessus.

On réalise les compositions des exemples 2, 3 et 4 et le comparatif 1 sur une extrudeuse double vis ayant une longueur égale à 30 fois le diamètre et on extrude dans des conditions standards adaptées aux produits des films de 50 µm, le débit étant de 20 kg/h. Les joncs obtenus sont transformés en granulés, qui sont à leur tour transformés en films par une technologie cast. On mesure la perméabilité à la vapeur d'eau selon la méthode décrite dans la norme ASTM E 96 méthode BW (film en contact avec l'eau) dans une étuve à une température de 38°C et d'humidité relative ambiante égale à 50 % maintenus durant toute la durée de la mesure. Le résultat de perméabilité à la vapeur d'eau est donné en g/m²/24 h, pour des films d'épaisseur de 50 µm. On obtient le tableau 1 suivant :

**TABLEAU 1**

| | Comparatif 1 | Exemple 2 | Exemple 3 | Exemple 4 |
|---|---|---|---|---|
| Composé (a) | 100 | 67 | 56 | 48 |
| Composé (b) | - | 3 | 4 | 12 |
| Composé (c) | - | 30 | 40 | 40 |
| Flux (g) | 75 | 625 | 910 | 750 |

Un essai supplémentaire a été réalisé avec une composition en polymères (a), (b) et (c) identique à celle de l'Exemple 3. Cette composition a été extrudée directement par mélange des granulés de polymères (a), (b) et (c) sur une ligne d'extrusion-lamination, formant un film de 25µm laminé sur un substrat de non tissé en polypropylène à une vitesse usuelle de ce type de technologie, supérieure à 100 m/min. La structure obtenu est de bonne qualité, sans défauts dans le film imper-respirant avec une adhésion satisfaisante entre le film et le substrat non tissé.

## Revendications

1. Film imper-respirant comprenant un mélange:
- d'au moins un polymère (a) pris dans le groupe comprenant -un copolymère (a1) éthylène /(méth)acrylate d'alkyle, un copolymère (a2) éthylène/acide (méth)acrylique éventuellement neutralisé, un copolymère éthylène/monomère vinylique (a3), le mélange (a1) et (a2), le mélange (a1) et (a3), le mélange (a2) et (a3) et le mélange (a1), (a2) et (a3);
et
- d'au moins un polyéthylène fonctionnalisé (b); et
- d'au moins un copolymère (c) ayant des blocs copolyamide et des blocs polyéther
ou bien un mélange
- d'au moins un polyéthylène fonctionnalisé (b); et
- d'au moins un copolymère (c) ayant des blocs copolyamide et des blocs polyéther

2. Film imper-respirant selon la revendication 1, dans lequel le copolymère (c) a une température de fusion comprise entre 80 et 150°C, de préférence entre 90 et 135°C.

3. Film imper-respirant selon l'une des revendications 1 ou 2, dans lequel le copolymère (c) ayant des blocs copolyamide et des blocs polyéther est un polyétheresteramide.

4. Film imper-respirant selon l'une des revendications 1 à 3, dans lequel les blocs copolyamide résultent de la condensation d'au moins un acide alpha-omega aminocarboxylique ou un lactame, au moins une diamine et au moins un acide dicarboxylique.

5. Film imper-respirant selon l'une des revendications 1 à 4, dans lequel les blocs copolyamide dérivent de blocs 6, 11, 12, 6.6, 6.10 ou 6.12.

6. Film imper-respirant selon l'une des revendications 1 à 5, dans lequel les blocs polyéther sont des blocs PEG.

7. Film imper-respirant selon l'une des revendications 1 à 6, dans lequel le (méth)acrylate d'alkyle (a1) est choisi parmi l'acrylate de n-butyle, l'acrylate d'isobutyle, l'acrylate d'éthyl-2 hexyle, l'acrylate de cyclohexyle, l'acrylate de n-octyle, le méthacrylate de méthyle et le méthacrylate d'éthyle.

8. Film imper-respirant selon l'une des revendications 1 à 7, dans lequel le polyéthylène fonctionnalisé (b) est un copolymère éthylène/(méth)acrylate d'alkyle fonctionnalisé.

9. Film imper-respirant selon l'une des revendications 1 à 8, dans lequel le polyéthylène fonctionnalisé (b) est un polyéthylène ou un copolymère éthylène/(méth)acrylate d'alkyle, fonctionnalisé par un monomère choisi parmi (i) un acide carboxylique insaturé, (ii) un anhydride d'acide carboxylique insaturé et (iii) un époxyde insaturé par greffage ou copolymérisation.

10. Film imper-respirant selon selon l'une des revendications 1 à 8, dans lequel le polyéthylène fonctionnalisé (b) est greffé ou copolymérisé avec un méthacrylate de glycidyle.

11. Film imper-respirant selon l'une des revendications 1 à 10, dans lequel le polymère (b) représente de 1 à 40, de préférence de 2 à 20, plus préférentiellement de 3 à 15 % en poids de la composition finale.

12. Film imper-respirant selon l'une des revendications 1 à 11, dans lequel le polymère (c) représente de 20 à 95, de préférence de 25 à 80, plus préférentiellement de 30 à 70 % en poids de la composition finale.

13. Film imper-respirant selon l'une des revendications 1 à 12, dans lequel le polymère (a) représente de 10 à 90, de préférence de 40 à 80 % en poids de la composition finale.

14. Film imper-respirant selon l'une des revendications 1 à 13, dans lequel la somme des polymères (a) et (b) représente de préférence plus de 50 %, plus préférentiellement plus de 55 % en poids de la composition finale.

15. Film imper-respirant selon l'une des revendications 1 à 13, dans lequel la somme des polymères (a) et (b) représente de préférence moins de 50 %, plus préférentiellement mois de 45 % en poids de la composition finale.

16. Film imper-respirant selon l'une des revendications 1 à 15, comprenant:
- de 40 à 80 %, de préférence 45 à 75 %, du polymère (a);
- de 2 à 20 %, de préférence 3 à 15 % du copolymère (b);
la somme des constituants (a) et (b) étant égale à au moins 50 %, de préférence au moins 55 %; et
- de 18 à 50 %, de préférence 22 à 45 %, d'au moins un copolymère (c) ayant des blocs copolyamide et des blocs polyéther.

17. Film imper-respirant selon l'une des revendications 1 à 16, présentant une épaisseur comprise entre 10 et 200 µm.

18. Procédé de fabrication d'un film selon l'une des revendications 1 à 17, comprenant l'extrusion de celui-ci.

19. Matériau imper-respirant comprenant le film selon l'une des revendications 1 à 17, associé a un non-tissé ou à un tissé.

20. Matériau imper-respirant selon la revendication 19, **caractérisé en ce que** le mélange de copolymères composant le film selon l'une des revendications 1 à 17 est extrudé et laminé sur un substrat textile tissé ou non tissé.

21. Procédé de fabrication d'un matériau imper-respirant selon la revendication 20, comprenant l'extrusion et la lamination du mélange de copolymères composant le film selon l'une des revendications 1 à 17 sur un substrat textile tissé ou non tissé.

## Claims

1. Breathable film comprising a blend:
- of at least one polymer (a) taken from the group comprising an ethylene/alkyl (meth)acrylate copolymer (a1), an optionally neutralized ethylene/(meth)acrylic acid copolymer (a2), an ethylene/vinyl monomer copolymer (a3), the (a1)/(a2) blend, the (a1)/(a3) blend, the (a2)/(a3) blend and the (a1)/(a2)/(a3) blend;
and
- of at least one functionalized polyethylene (b); and
- of at least one copolymer (c) having copolyamide blocks and polyether blocks;
or else a blend:
- of at least one functionalized polyethylene (b); and
- of at least one copolymer (c) having copolyamide blocks and polyether blocks.

2. Breathable film according to Claim 1, in which the copolymer (c) has a melting point of between 80 and 150°C, preferably between 90 and 135°C.

3. Breathable film according to either of Claims 1 and 2, in which the copolymer (c) having copolyamide blocks and polyether blocks is a polyetheresteramide.

4. Breathable film according to one of Claims 1 to 3, in which the copolyamide blocks result from the condensation of at least one alpha,omega-aminocarboxylic acid or a lactam, at least one diamine and at least one dicarboxylic acid.

5. Breathable film according to one of Claims 1 to 4, in which the copolyamide blocks derive from 6, 11, 12, 6,6, 6,10 or 6,12 blocks.

6. Breathable film according to one of Claims 1 to 5, in which the polyether blocks are PEG blocks.

7. Breathable film according to one of Claims 1 to 6, in which the alkyl (meth)acrylate (a1) is chosen from n-butyl acrylate, isobutyl acrylate, 2-ethylhexyl acrylate, cyclohexyl acrylate, n-octyl acrylate, methyl methacrylate and ethyl methacrylate.

8. Breathable film according to one of Claims 1 to 7, in which the functionalized polyethylene (b) is a functionalized ethylene/alkyl (meth)acrylate copolymer.

9. Breathable film according to one of Claims 1 to 8, in which the functionalized polyethylene (b) is a polyethylene or an ethylene/alkyl (meth)acrylate copolymer, functionalized by a monomer chosen from (i) an unsaturated carboxylic acid, (ii) an unsaturated carboxylic acid anhydride and (iii) an unsaturated epoxide, by grafting or copolymerization.

10. Breathable film according to one of Claims 1 to 8, in which the functionalized polyethylene (b) is grafted or copolymerized with a glycidyl methacrylate.

11. Breathable film according to one of Claims 1 to 10, in which the polymer (b) represents from 1 to 40%, preferably from 2 to 20%, more preferably from 3 to 15% by weight of the final composition.

12. Breathable film according to one of Claims 1 to 11, in which the polymer (c) represents from 20 to 95%, preferably from 25 to 80%, more preferably from 30 to 70% by weight of the final composition.

13. Breathable film according to one of Claims 1 to 12, in which the polymer (a) represents from 10 to 90%, preferably from 40 to 80% by weight of the final composition.

14. Breathable film according to one of Claims 1 to 13, in which the sum of the polymers (a) and (b) preferably represents more than 50%, more preferably more than 55% by weight of the final composition.

15. Breathable film according to one of Claims 1 to 13, in which the sum of the polymers (a) and (b) preferably represents less than 50%, more preferably less than 45% by weight of the final composition.

16. Breathable film according to one of Claims 1 to 15, comprising:
- from 40 to 80%, preferably from 45 to 75%, of the polymer (a);
- from 2 to 20%, preferably from 3 to 15%, of the copolymer (b);
the sum of constituents (a) and (b) being equal to at least 50%, preferably at least 55%; and
- from 18 to 50%, preferably from 22 to 45%, of at least one copolymer (c) having copolyamide blocks and polyether blocks.

17. Breathable film according to one of Claims 1 to 16, having a thickness of between 10 and 200 µm.

18. Process for manufacturing a film according to one of Claims 1 to 17, which includes the extrusion of said film.

19. Breathable material comprising the film according to one of Claims 1 to 17, combined with a nonwoven or a woven.

20. Breathable material according to Claim 19, **characterized in that** the blend of copolymers making up the film according to one of Claims 1 to 17 is extruded and laminated onto a woven or nonwoven fabric substrate.

21. Process for manufacturing a breathable material according to Claim 20, comprising the extrusion and lamination of the copolymer blend making up the film according to one of Claims 1 to 17 onto a woven or nonwoven fabric substrate.

## Patentansprüche

1. Atmungsaktiver Film, umfassend eine Mischung aus:
- mindestens einem Polymer (a) aus der Gruppe enthaltend ein Ethylen/Alkyl(meth)acrylat-Copolymer (a1), ein gegebenenfalls neutralisiertes Ethylen/(Meth)acrylsäure-Copolymer (a2), ein Ethylen/Vinylmonomer-Copolymer (a3), die Mischung aus (a1) und (a2), die Mischung aus (a1) und (a3), die Mischung aus (a2) und (a3) und die Mischung aus (a1), (a2) und (a3);
und
- mindestens einem funktionalisierten Polyethylen (b); und
- mindestens einem Copolymer (c) mit Copolyamidblöcken und Polyetherblöcken
oder auch einer Mischung aus
- mindestens einem funktionalisierten Polyethylen (b); und
- mindestens einem Copolymer (c) mit Copolyamidblöcken und Polyetherblöcken.

2. Atmungsaktiver Film nach Anspruch 1, bei der das Copolymer (c) einen Schmelzpunkt zwischen 80 und 150°C und vorzugsweise zwischen 90 und 135°C aufweist.

3. Atmungsaktiver Film nach Anspruch 1 oder 2, bei der es sich bei dem Copolymer (c) mit Copolyamidblöcken und Polyetherblöcken um ein Polyetheresteramid handelt.

4. Atmungsaktiver Film nach einem der Ansprüche 1 bis 3, bei der sich die Copolyamidblöcke aus der Kondensation von mindestens einer alpha,omega-Aminocarbonsäure oder eines Lactams, mindestens eines Diamins und mindestens einer Dicarbonsäure ergeben.

5. Atmungsaktiver Film nach einem der Ansprüche 1 bis 4, bei der sich die Copolyamidblöcke von 6-, 11,-, 12-, 6.6-, 6.10- oder 6.12-Blöcken ableiten.

6. Atmungsaktiver Film nach einem der Ansprüche 1 bis 5, bei der es sich bei den Polyetherblöcken um PEG-Blöcke handelt.

7. Atmungsaktiver Film nach einem der Ansprüche 1 bis 6, bei der das Alkyl(meth)acrylat (a1) unter n-Butylacrylat, Isobutylacrylat, 2-Ethylhexylacrylat, Cyclohexylacrylat, n-Octylacrylat, Methylmethacrylat und Ethylmethacrylat ausgewählt ist.

8. Atmungsaktiver Film nach einem der Ansprüche 1 bis 7, bei der es sich bei dem funktionalisierten Polyethylen (b) um ein funktionalisiertes Ethylen/Alkyl(meth)acrylat-Copolymer handelt.

9. Atmungsaktiver Film nach einem der Ansprüche 1 bis 8, bei der es sich bei dem funktionalisierten Polyethylen (b) um ein durch Pfropfung oder Copolymerisation durch ein unter (i) einer ungesättigten Carbonsäure, (ii) einem ungesättigten Carbonsäureanhydrid oder (iii) einem ungesättigten Epoxid ausgewählten Monomer funktionalisiertes Polyethylen oder Ethylen/Alkyl(meth)-acrylat-Copolymer handelt.

10. Atmungsaktiver Film nach einem der Ansprüche 1 bis 8, bei der das funktionalisierte Polyethylen (b) mit einem Glycidylmethacrylat gepfropft oder copolymerisiert ist.

11. Atmungsaktiver Film nach einem der Ansprüche 1 bis 10, bei der das Polymer (b) 1 bis 40 Gew.-%, vorzugsweise 2 bis 20 Gew.-% und besonders bevorzugt 3 bis 15 Gew.-% der Endzusammensetzung ausmacht.

12. Atmungsaktiver Film nach einem der Ansprüche 1 bis 11, bei der das Polymer (c) 20 bis 95 Gew.-%, vorzugsweise 25 bis 80 Gew.-% und besonders bevorzugt 30 bis 70 Gew.-% der Endzusammensetzung ausmacht.

13. Atmungsaktiver Film nach einem der Ansprüche 1 bis 12, bei der das Polymer (a) 10 bis 90 Gew.-% und vorzugsweise 40 bis 80 Gew.-% der Endzusammensetzung ausmacht.

14. Atmungsaktiver Film nach einem der Ansprüche 1 bis 13, bei der die Summe der Polymere (a) und (b) vorzugsweise mehr als 50 Gew.-% und besonders bevorzugt mehr als 55 Gew.-% der Endzusammensetzung ausmacht.

15. Atmungsaktiver Film nach einem der Ansprüche 1 bis 13, bei der die Summe der Polymere (a) und (b) vorzugsweise weniger als 50 Gew.-% und besonders bevorzugt weniger als 45 Gew.-% der Endzusammensetzung ausmacht.

16. Atmungsaktiver Film nach einem der Ansprüche 1 bis 15, enthaltend:
- 40 bis 80% und vorzugsweise 45 bis 75% Polymer (a) ;
- 2 bis 20% und vorzugsweise 3 bis 15% Copolymer (b);
wobei die Summe der Bestandteile (a) und (b) mindestens 50% und vorzugsweise mindestens 55% beträgt; und
- 18 bis 50% und vorzugsweise 22 bis 45% mindestens eines Copolymers (c) mit Copolyamidblöcken und Polyetherblöcken.

17. Atmungsaktiver Film nach einem der Ansprüche 1 bis 16 mit einer Dicke zwischen 10 und 200 µm.

18. Verfahren zur Herstellung eines Films nach einem der Ansprüche 1 bis 17, bei dem man diesen extrudiert.

19. Atmungsaktives Material, enthaltend den Film nach einem der Ansprüche 1 bis 17 in Kombination mit einem Vliesstoff oder einem Gewebe.

20. Atmungsaktives Material nach Anspruch 19, **dadurch gekennzeichnet, daß** die Mischung von Copolymeren, aus denen der Film nach einem der Ansprüche 1 bis 17 besteht, auf ein Vliesstoff- oder Gewebe-Textilsubstrat aufextrudiert und auflaminiert ist.

21. Verfahren zur Herstellung eines atmungsaktiven Materials nach Anspruch 20, bei dem man die Mischung von Copolymeren, aus denen der Film nach einem der Ansprüche 1 bis 17 besteht, auf ein Vliesstoff- oder Gewebe-Textilsubstrat aufextrudiert und auflaminiert.
